# EUROPEAN PATENT SPECIFICATION

(11) **EP 0 422 812 B1**
(45) Date of publication and mention of the grant of the patent: **02.03.1994**
(21) Application number: 90310732.4
(22) Date of filing: 01.10.1990
(51) Int. Cl.: B62B 7/14, B62B 9/12

(54) **Pushchair**
Kinderwagen
Poussette

(30) Priority: 07.10.1989 GB 8922624
(43) Date of publication of application: 17.04.1991
(73) Proprietor: BRITAX-TEUTONIA KINDERWAGENFABRIK GmbH, D-32112 Hiddenhausen (DE)
(72) Inventor: Gotting, Bernd, D-4904 Enger (DE)
(74) Representative: Hollinghurst, Antony

(56) References cited:
- FR-A- 1 438 404
- FR-A- 2 593 762
- GB-A- 2 165 443
- GB-A- 2 197 784
- GB-A- 2 211 082

## Description

This invention relates to a pushchair of the type having a chassis which includes two side members, a pair of clamping pivot joints mounted on respective side members with their pivot axes aligned with each other and each supporting a respective seat support member, a fabric seat body secured to rigid upper and lower seat transverse members, means connecting each seat transverse member so that it extends between the seat support members, and a harness for a seat occupant connected to the seat support members.

A pushchair of this type is disclosed in Patent Specification US-A-4542915. The seat body can be oriented in either of two alternative positions. In one position, an occupant of the seat faces in the direction of travel and away from an adult pushing the chair. In the other position, the occupant faces the adult. Movement between these two positions involves pushing the fabric seat body through the space between the two seat support members, which initially leaves the harness on the wrong side of the seat body. It is necessary to detach the harness and refit it in the correct orientation. This operation involves threading the individual straps of the harness through openings in the seat body. This makes conversion of the pushchair from forward facing to rearward facing a time-consuming and fiddly operation.

GB-A-2197784 discloses a pushchair having a rigid seat body to which a harness is attached. The seat body is detachably secured to a chassis so that it can be removed and used separately as a car seat. GB-A-2165443 discloses a car seat having a flexible fabric body.

According to the invention, in a pushchair of the foregoing type, the straps of the harness are connected to the seat support members via the transverse members and the means connecting the transverse members to the seat support members comprise releasable clips, thereby enabling the seat body and the harness to be detached from the seat support members of the chassis as a single unit.

Where, in addition to shoulder straps, the harness has lap straps instead of or in addition to a crotch strap, the transverse members are preferably interconnected by a pair of side members so as to form a rectangular seat frame. The side members provide attachment points for the ends of the lap straps. In use, each side member is disposed parallel to and in close proximity to a respective seat support member.

The seat support members may be interconnected by a pair of end members so as to form a rectangular seat support frame. This has the advantage of keeping the two seat support members in alignment with each other when the seat is detached from them.

An embodiment of the invention will now be described, by way of example, with reference to the accompanying drawings, in which:-
Figure 1 is a perspective view of a pushchair in accordance with the invention, with the seat in the forward-facing position;
Figure 2 is a perspective view, similar to Figure 1 but with the seat in the rearward-facing position; and
Figures 3 and 4 are exploded perspective views, similar to Figures 1 and 2 respectively but showing the seat detached from the chassis.

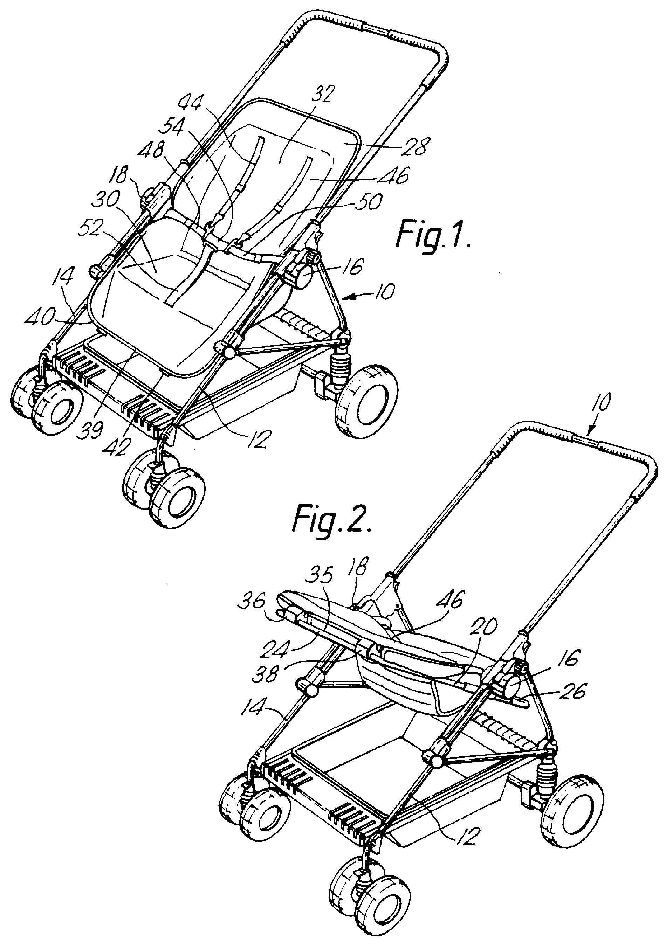

Referring first to Figures 1 and 2, a pushchair comprises a chassis 10 including side members 12 and 14, each of which carries a respective pivot joint 16, 18, as described in GB-A-2212555. The rest of the chassis 10 forms no part of the invention and will not be described further.

The pivot joints 16 and 18 support respective side members 20, 22 of a rectangular seat support frame which also includes a front end member 24 and a rear end member 26. A fabric seat 28, which includes a seat portion 30 and a back rest portion 32, is secured around its periphery to a rectangular seat frame 34, the length: of which is the same as the length of the side members 20 and 22 of the seat support frame and the width of which is such that the seat frame 34 can fit between the pivot joints 16 and 18. On its transverse portion 35 above the seat back 32, the seat frame 34 has two releasable clips 36 and 38, shown in Figure 2 as engaging with the front end member 24 of the seat support frame. On its opposite transverse portion 39, the seat frame 34 has two similar clips 40 and 42 which, when the seat is in the orientation shown in Figure 2, engage with the rear end member 26 of the seat support frame.

The seat 28 has a five-part harness, consisting of two shoulder straps 44 and 46, two lap straps 48 and 50 and a crotch strap 52 inter-connected by a buckle 54. The shoulder straps 44 and 46 and the crotch strap 52 project through respective slots in the fabric seat 28, while the lap straps 48 and 50 extend round the edges thereof, all five straps having their free ends attached to the frame 34.

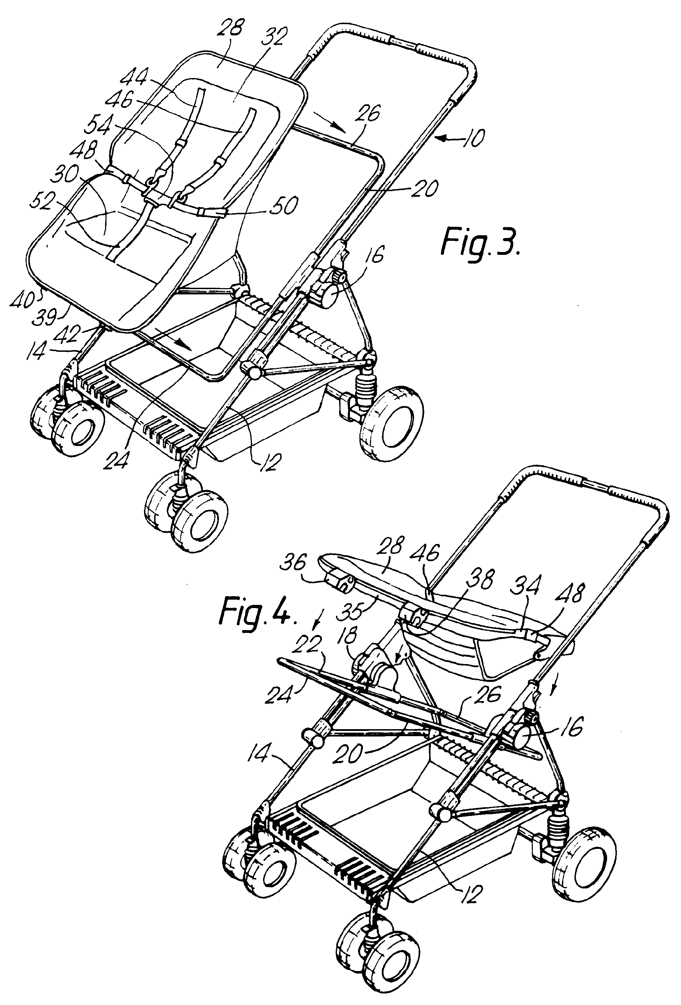

When the seat 28 is in the rearward-facing position, the clips 36 and 38 are secured to the front end member 24 of the seat support frame and the clips 40 and 42 to the rear end member 26 thereof, as described above. When the seat 28 is to be changed to the forward-facing position illustrated in Figure 1, the four clips 36, 38, 40 and 42 are released and the seat 28 detached as illustrated in Figure 4. The seat 28 is then reversed and offered to the seat support frame 20, 22, 24 and 26 in the orientation illustrated in Figure 3. The clips 40 and 42 then engage with the front end member 24 and the clips 36 and 38 with the rear end member 36. The pivot joints 16 and 18 may be released and the seat support frame 20, 22, 24, 26 pivoted to its new orientation, either before or after reversal of the position of the seat 28 thereon.

## Claims

1. A pushchair having a chassis (10) which includes two side members (12, 14), a pair of clamping pivot joints (16, 18) mounted on respective side members (12, 14) with their pivot axes aligned with each other and each supporting a respective seat support member (20, 22), a fabric seat body (28) secured to rigid upper and lower seat transverse members (35, 39), means connecting each transverse member (35, 39) so that it extends between the seat support members (20, 22), and a harness (44-52) for a seat occupant connected to the seat support members (20, 22), characterised in that the straps of the harness (44-52) are connected to the seat support members (20, 22) via the transverse members (35, 39) and the means connecting the seat transverse members (35, 39) to the seat support members (20, 22) comprise releasable clips (36-42), thereby enabling the seat body (28) and the harness (44-52) to be detached from the seat support members (20, 22) of the chassis (10) as a single unit.

2. A pushchair according to claim 1, wherein the transverse members (35, 39) are interconnected by a pair of side members so as to form a rectangular seat frame (34).

3. A pushchair according to claim 1 or 2, wherein the seat support members (20, 22) are interconnected by a pair of end members (24, 26) so as to form a rectangular seat support frame, and the clips (36-42) engage with the end members (24, 26).

## Patentansprüche

1. Sportwagen mit einem Gestell (10), das folgendes umfaßt: zwei Seitenglieder (12, 14), ein Paar an den jeweiligen Seitengliedern (12, 14) angebrachte KlemmZapfengelenke (16, 18), deren Drehachsen miteinander fluchten und die jeweils ein entsprechendes Sitzstützglied (20, 22) tragen, ein Sitzkörper (28) aus Stoff, der mit den Sitzstützgliedern (20, 22) verbunden ist, und ein mit den Sitzstützgliedern (20, 22) verbundenes Riemenzeug (44-52) für ein im Sitz sitzendes Kind, dadurch gekennzeichnet, daß der Sitzkörper (28) aus Stoff an starren oberen und unteren Sitzquergliedern (34) befestigt ist, Riemen des Riemenzeugs (44-52) an den Quergliedern (34) befestigt sind und lösbare Klemmen (36-42) zum Befestigen jedes Querglieds (35, 39) vorgesehen sind, so daß sie zwischen den Sitzstützgliedern (20, 22) verlaufen, wodurch der Sitzkörper (28) und das Riemenzeug (44-52) als eine Einheit von den Sitzstützgliedern (20, 22) des Gestells (10) abgebaut werden können.

2. Sportwagen nach Anspruch 1, bei dem die Querglieder (35, 39) über ein Paar Seitenglieder derart miteinander verbunden sind, daß sie einen rechteckigen Sitzrahmen (34) bilden.

3. Sportwagen nach Anspruch 1, bei dem die Sitzstützglieder (20, 22) über ein Paar Endglieder (24, 26) derart miteinander verbunden sind, daß sie einen rechteckigen Sitzstützrahmen bilden, und bei dem die Klemmen (36-42) die Endglieder (24, 26) in Eingriff nehmen.

## Revendications

1. Poussette ayant un châssis (10) comportant deux organes latéraux (12, 14), une paire d'articulations à pivot de serrage (16, 18) montées sur des organes latéraux respectifs (12, 14) dont les axes d'articulation sont alignés l'un par rapport à l'autre et supportent chacun un organe respectif (20, 22) de support de siège, un corps de siège en tissu (28) relié aux organes (20, 22) de support de siège et un harnais (44-52) pour un occupant du siège, relié aux organes (20, 22) de support de siège, caractérisée en ce que le corps de siège en tissu (28) est fixé à des organes transversaux rigides (34) supérieur et inférieur de siège, des lanières du harnais (44-52) sont fixées aux organes transversaux (34) et des attaches détachables (36-42) sont prévues pour fixer chaque organe transversal (35, 39) de manière à ce qu'il s'étende entre les organes (20, 22) de support de siège, permettant ainsi au corps de siège (28) et au harnais (44-52) d'être détachés des organes (20, 22) de support de siège du châssis (10) en une seule unité.

2. Poussette selon la revendication 1, dans laquelle les organes transversaux (35, 39) sont reliés entre eux par une paire d'organes latéraux de manière à former un cadre de siège rectangulaire (34).

3. Poussette selon la revendication 1, dans laquelle les organes (20, 22) de support de siège sont reliés entre eux par une paire d'organes d'extrémité (24, 26) de manière à former un cadre de support de siège rectangulaire, et les attaches (36-42) s'engagent dans les organes d'extrémité (24, 26).
